# EUROPEAN PATENT APPLICATION

(11) **EP 1 380 783 A1**
(43) Date of publication of application: **14.01.2004**
(21) Application number: 03077199.2
(22) Date of filing: 11.07.2003
(51) Int. Cl.: F16K 35/10

(54) **Valve lock mechanism**

(30) Priority: 12.07.2002 GB 0216199
(71) Applicant: Smith Flow Control Limited, Witham, Essex CM8 3YQ (GB)
(72) Inventor: Brown, Adrian Richard, Colchester, Essex CO3 0YW (GB)
(74) Representative: Gillam, Francis Cyril

(57) **Abstract**

For a fluid flow control valve having a valve body (12) and a rotatable operating member (11) projecting from the body, a lock mechanism (10) having a driving member (14) adapted for attachment to and rotation of the operating member (11), which driving member has an outwardly-directed groove (17) formed therearound. A turning member (21) is mounted coaxially on the driving member and has an arcuate inwardly-directed groove (30) axially aligned with and opposed to the groove of the driving member. A plurality of balls (37) is located each partly in the two opposed grooves (17,30) thereby to permit relative rotation between the driving member and the turning member but which balls prevent relative axial movement. A key mechanism (32) is secured to the turning member and has a cam (50) engageable with the driving member to prevent relative rotation between the driving member and the turning member, the cam being operable by use of a key inserted into the key mechanism. A portion (35) of the key mechanism is in axial alignment with the opposed grooves (17,30) and serves to retain the balls (37) in those grooves.

## Description

This invention relates to a lock mechanism for a valve having a valve body and a rotatable valve operating member projecting from the valve body. In particular, though not exclusively, this invention concerns a lock mechanism for an industrial fluid flow control valve, as used for example in chemical manufacturing plants, oil refineries and pipelines, where the valve must be secured against operation other than by a person specifically authorised to do so.

Industrial fluid flow control valves typically for installation in a pipe of at least 50mm diameter, are used to control the flow of fluids along the pipe and there can be serious consequences if a valve is operated at an inappropriate time, having regard to the overall plant or pipeline. As such, there have been numerous proposals for locking a valve against unauthorised operation, ranging from the use of a simple padlock and chain, passed through the hand-wheel of the valve, to more sophisticated purpose-designed lock mechanisms adapted to be fitted directly to the valve. With the latter form of mechanisms, it is important that there is no significant alteration to the valve body to accommodate the fitting of the lock mechanism, else the manufacturer's warranty on the valve may be voided.

A recognised problem with many of the known designs of lock mechanism adapted to be fitted to an industrial fluid flow control valve without significant modification to the original valve is that the mechanisms often provide only relatively low security against unauthorised operation. Thus, though the mechanism may serve as a deterrent, nevertheless it is incapable of withstanding a determined attempt to bypass the mechanism. Further, as many of these mechanisms are capable of being removed from a valve for example for servicing, it is often relatively easy for a determined person to remove the mechanism by releasing some kind of attachment device, so then permitting unauthorised operation of the valve.

It is a principal aim of the present invention to provide a high security lock mechanism for a valve such as an industrial pipeline valve, which mechanism is able to withstand an attempt to perform unauthorised operation of the valve and also an attempt to remove the mechanism from the valve, thereby permitting operation of the valve. Thus, an aim of the invention is to ensure that once fitted, it is extremely difficult to remove the mechanism short of actually destroying the mechanism for example by cutting at least part of it away, using special equipment.

This invention provides a lock mechanism for a valve having a valve body and a rotatable valve operating member projecting from the valve body, which mechanism comprises a driving member adapted for attachment to the operating member for rotation therewith, a turning member mounted coaxially on the driving member, and a key mechanism secured to the turning member and having a detent selectively engageable with the driving member by use of a key to prevent relative rotation between the driving member and the turning member. Such a lock mechanism is characterised in that the driving member is formed with an arcuate outwardly-directed groove of part-circular cross-section and centred on the axis of the driving member, the turning member is formed with an arcuate inwardly-directed groove also of part-circular cross-section which groove is axially aligned with and opposed to the groove of the driving member, in that there is a plurality of balls each located partly in the two opposed grooves thereby to prevent relative axial movement between the turning member and the driving member while permitting relative rotation therebetween, and in that the key mechanism includes a portion in axial alignment with the opposed grooves which portion serves to retain the balls in the opposed grooves.

With the lock mechanism of this invention, the turning member may be formed as an integral unit which wholly surrounds the driving member and at least part of the valve body, such as the valve bonnet or top-works from which the valve operating member projects. The driving member is secured to the operating member of the valve, which operating member might be a rotatable nut, in the case of a rising stem valve. The turning member is locked to the driving member by virtue of the plurality of balls each located partly in the groove of the driving member and partly in the groove of the turning member, the balls allowing rotation of the turning member with respect to the driving member. The balls are retained in the grooves by a key mechanism, which may be robustly-constructed to resist unauthorised removal. The key mechanism may be semi-permanently or even permanently secured to the turning member whereby it becomes extremely difficult, if at all possible, to remove the key mechanism. The only way to release the turning member is by removal of the key mechanism, so releasing the balls, but high security fasteners may be employed to hold the key mechanism to the turning member .

Most preferably, the groove in the driving member is continuous and is encircled by the turning member. Said portion of the key mechanism could simply blank off the two ends of the groove in the turning member so retaining the balls in the arcuate groove in the turning member but also engaged in the corresponding opposed part of the groove in the driving member, irrespective of the angular position of the turning member with respect to the driving member. In the alternative, the key mechanism itself could define an arcuate groove and which is opposed to the groove in the driving member when the key mechanism is secured to the turning member, the length and form of that arcuate groove in effect completing the circle of the arcuate groove in the turning member. In this way, the turning member together with the key mechanism define a continuous groove opposed to the continuous groove in the driving member.

The turning member may be of simple cylindrical form but with an aperture therein and into which is fitted the key mechanism. High security fasteners such as high tensile shear-headed bolts may be employed to secure the key mechanism to the turning member which bolts are recessed in counterbores formed in the turning member. Further, when sheared, such bolts may present a generally dome-shaped profile, which is highly resistant to attack for example by a pipe or tube forced thereover, or by drilling. Other forms of security fastener could be employed.

The key mechanism may include a cam rotatable by insertion or removal of a suitable key from the key mechanism, which cam when rotated by the insertion of a key turns to engage in a recess in the driving member. Thus, with a key present, drive may be imparted from the turning member to the driving member. Conversely, removal of the key turns the cam so as to be disengaged from the recess, whereafter the turning member may rotate freely about the driving member. The locked setting, with the key absent, allows the turning member to free-wheel about the driving member, so making it impossible to turn the driving member.

In order to ensure the free movement of the turning member about the driving member by maintaining the members co-axial, a further journal may be provided between the driving member and the turning member, at an axial position spaced from the opposed grooves. Such a journal may be formed by a low friction ring, for example of phosphor-bronze, interposed between the driving member and the turning member and secured to one of those members. Conveniently, such a ring is secured to the end of the turning member furthest (in use) from the valve, which ring has a bore which is a running fit on the driving member.

In a preferred embodiment, the turning member is furnished with a skirt which depends downwardly towards the valve to which the lock mechanism is to be fitted, so as to enclose the valve top-works. Such a skirt may be cut to an appropriate length before installation of the lock mechanism, to minimise access to the top-works and also to the underside of the driving member.

By way of example only, one specific embodiment of this invention will now be described in detail, reference being made to the accompanying drawings in which:-
Figure 1 is an isometric view of the embodiment of lock mechanism for fitting to an industrial fluid flow control valve, with the hand-wheel partly cut away for clarity;
Figure 2 is a view similar to that of Figure 1, but with the turning member top plate partly cut away and also with the key mechanism separated from the turning member;
Figure 3 is a vertical section through the lock mechanism, as fitted to the operating member of a valve;
Figure 4 is a view on an enlarged scale of part of the mechanism shown in Figure 3; and

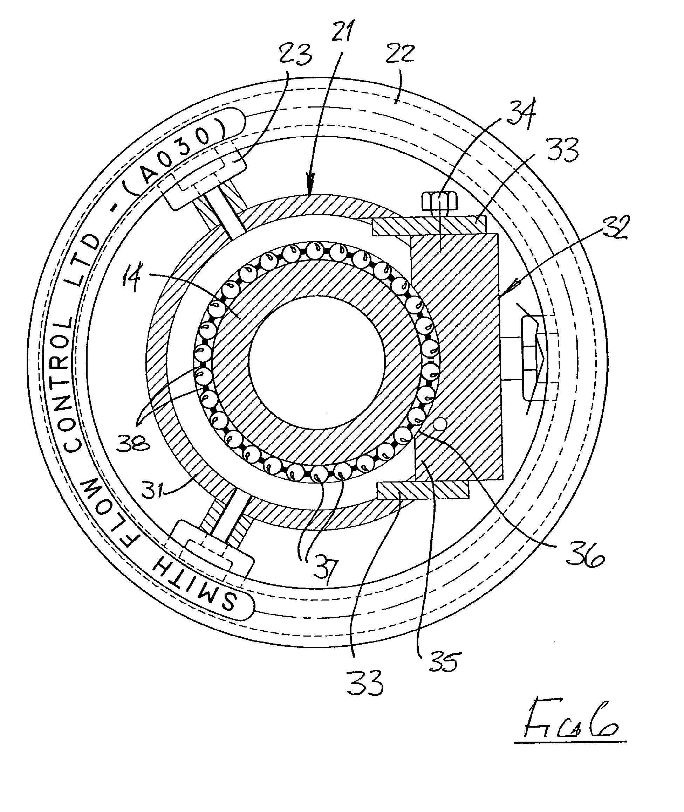

Figures 5 and 6 are plan views, partly in section but taken at different section lines as shown at V-V and VI-VI marked on Figure 3.

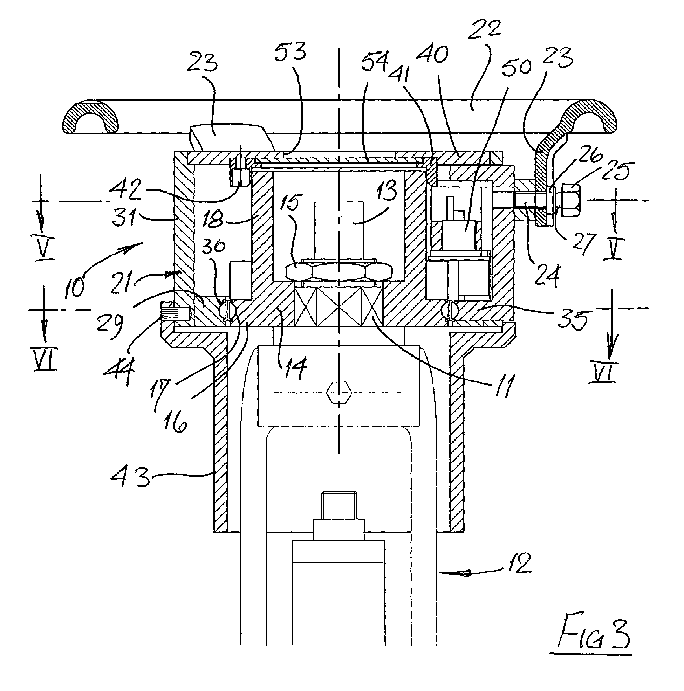

In Figures 3 to 5, the lock mechanism 10 is shown attached to a nut 11 of a rising stem valve, the top-works of which are shown diagrammatically at 12. Rotation of the nut 11 raises and lowers the valve stem 13, so opening and closing the valve, as appropriate. The only connection to the valve is through the nut 11, no alteration having been made to the valve other than the removal of the original hand-wheel, from the nut.

The lock mechanism includes a driving member 14 having an inner profile adapted to the shape of the nut 11 - and in the illustrated embodiment, the nut 11 has an hexagonal outer profile. Normally, a secondary nut 15 is used to clamp a hand-wheel to the nut 11, but here the driving member 14 is instead held to the nut 11 by the secondary nut 15. The driving member 14 is essentially cylindrical and is formed at its lower end with a flange 16 in the periphery of which is formed a groove 17 of part-circular cross-sectional shape and directed radially outwardly. In the cylindrical wall 18 of the driving member 14, above the flange 16, there are formed three recesses 19, for a purpose to be described below.

A turning member 21 is rotatably mounted on the driving member 14. The turning member includes a hand-wheel 22 having spokes 23 secured by security bolts 24 to the cylindrical side wall 31 of the turning member as well as to a key mechanism 32, to be described below. As best seen in Figure 3, each security bolt 24 has a conventional hexagonal head 25 connected to the main body 26 of the bolt by means of a stem 27; when the bolt has been tightened by a spanner engaged with the head 25 to a pre-set torque, the stem 27 shears off, so leaving the body 26 tightened down. The body cannot subsequently be released since there is no surface on to which a tool can be engaged.

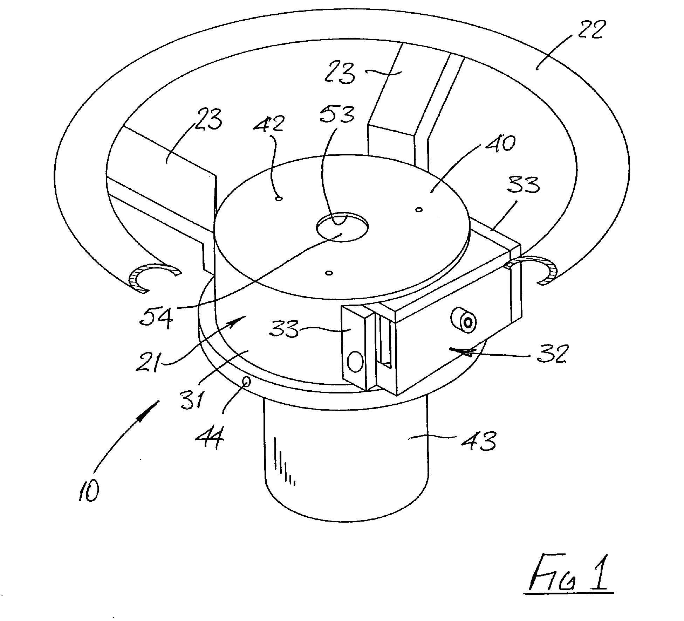

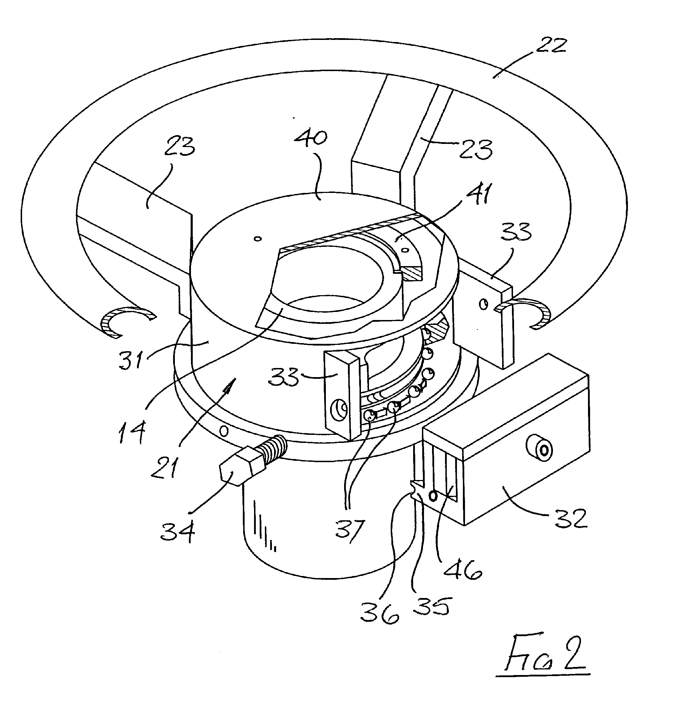

As best seen in Figures 1 and 2, a window is formed through the cylindrical side wall 31 of the turning member, and a part-circular internal flange 29 (Figure 3) extends internally around the side wall, other than where the window is formed. A groove 30 is formed in the inwardly-directed cylindrical surface of the flange 29, the groove 30 being of part-circular cross-sectional shape and being opposed to the groove 17 in the driving member 14. A key mechanism 32 is fitted into the window in the side wall, the mechanism being received between side plates 33 permanently secured to the wall 31 and being held in position by further security bolts 34, passing through the side plates 33 and engaged with threaded bores in the key mechanism 32. The bolts 34 are similar to the bolts 24 described above and so, when the key mechanism has been fitted in position and the bolts have fully been tightened, the heads shear off so preventing subsequent removal of those bolts.

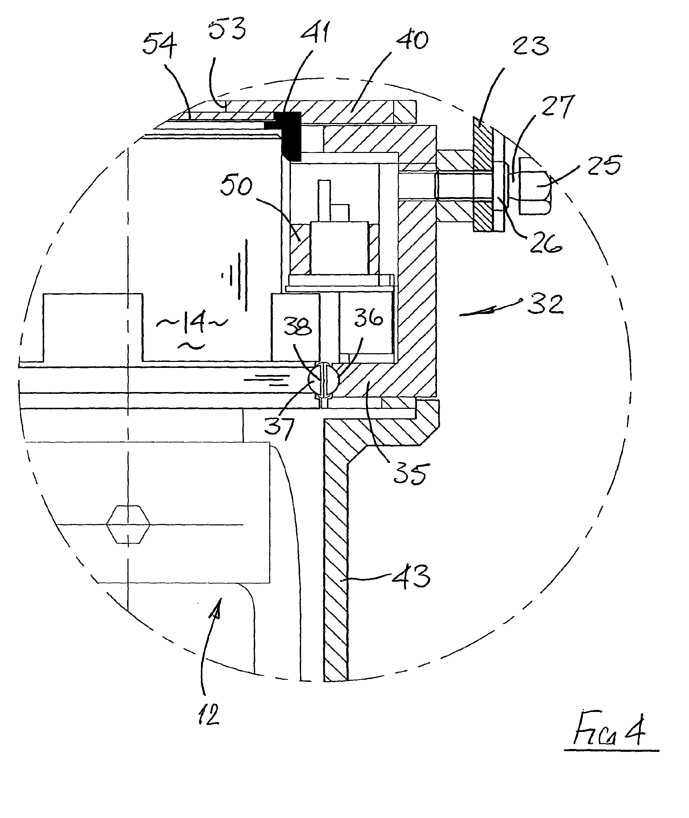

The key mechanism 32 has a foot 35 which is aligned with the flange 29 of the turning member, the inwardly-directed surface of the foot 35 being of arcuate form and centred on the axis of the turning member. A further groove 36 also of part-circular form is provided in the inwardly-directed surface of the foot 35 such that the further groove 36 is aligned with and serves as a continuation of the groove 30 of the turning member. In this way, once the key mechanism 32 has been fitted to the turning member, a continuous circular groove surrounds the groove 17 in the driving member 14. A plurality of balls 37 are located in the aligned grooves 17 and 30,36, which balls are held by a cage 38 extending around each ball and having a common base member received in the space between the flange 16 of the driving member and the flange 29 of the turning member or the foot 35 of the key mechanism, as appropriate, as shown in Figure 4. In this way, the turning member is rotatably mounted on the driving member but is held against axial movement with respect thereto.

The upper end of the turning member 21 is provided with a cover plate 40, for example internally welded in position during manufacture of the turning member. The cover plate 40 supports a phosphor-bronze bearing ring 41 on its underside, the ring being secured in position by means of bolts 42 threaded into the cover plate. The bearing ring 41 receives the upper end of the driving member 14 whereby the turning member 21 is held coaxial with the driving member and with the axis of the valve stem 13, for free rotation about the driving member 14.

Secured to the lower part of the turning member 21 is a skirt 43, suitably profiled to be a close fit around the top-works 12 of the valve with which the lock mechanism is to be used. The skirt 43 is held in place by hammer-drive pins 44, pressed into aligned bores spaced around the turning member 21. Before the mechanism is fitted to a valve, a skirt of an appropriate diameter is selected and cut to a suitable length for the valve top-works, and then is secured to the turning member by the pins 44. Once fully driven home, the pins 44 cannot be removed so preventing removal of the skirt 43.

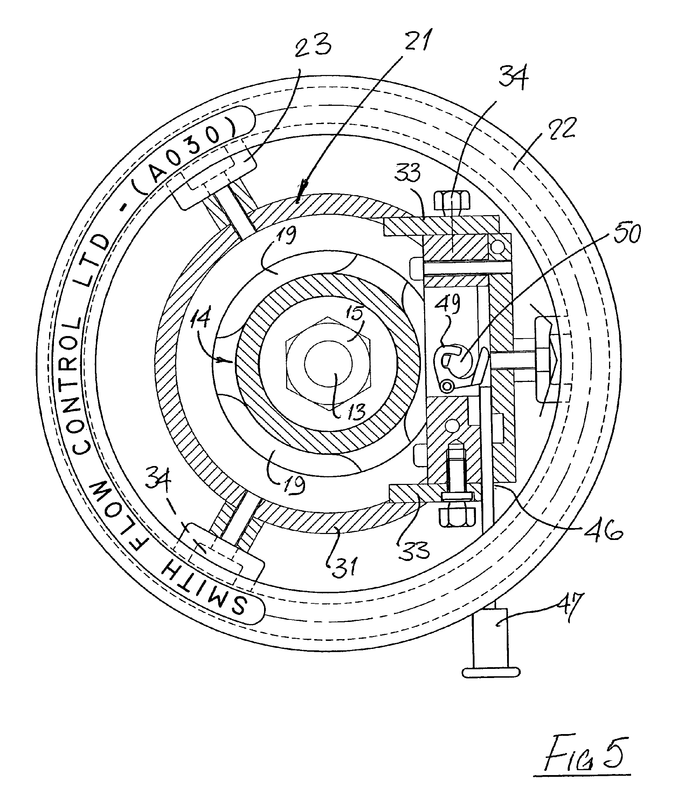

The key mechanism 32 is provided with a receptor 46 for a plate key 47 (Figure 5) of a known design, which is slid linearly into the receptor to unlock the mechanism. Removal of the key locks the mechanism by disengaging the drive between the turning member 21 and the driving member 14, so that the turning member may rotate freely about the driving member, thus preventing operation of the valve.

Provided within the key mechanism is a release pawl 49 which is pivoted as the key 47 is inserted into the receptor 46, to free for rotation a cam 50. Further insertion of the key engages teeth (not shown) on the key with corresponding teeth on the cam, so rotating the cam and bringing a lobe on the cam into or out of engagement (depending upon the sense of movement of the key) with a recess 19 in the cylindrical wall 18 of the driving member 14.

The arrangement described above allows the lock mechanism to be operated at virtually any required angular setting of the valve, including its two extremes of movement. Interengagement of the cam 50 is possible with the recesses 19 in the driving member 14 other than when the material of the driving member between adjacent recesses 19 is aligned with the cam 50. The recesses 19 have an angular extent significantly greater than the size of the cam and also are rounded at their ends, in order to facilitate engagement of the cam 50 with a recess 19, though this will give a small amount of lost motion between the turning member and the driving member when the mechanism has been unlocked, to connect the turning member to the driving member.

To fit the lock mechanism to a valve, the conventional valve-operating hand-wheel is removed from the valve nut 11 and the driving member 14 is secured thereto, by means of the secondary nut 15. A skirt 43 appropriate for the valve is selected and cut to a suitable length and then is secured to the turning member 21 by means of the four hammer-drive pins 44. The turning member and skirt 43 is dropped on to the driving member to engage the upper end of the driving member in the bearing ring 41. A linear but flexible cage 38 of balls 37 is fed into the aligned grooves 17 and 30, respectively in the driving member and the turning member, from within the window of the turning member. A sufficiently long cage is used, such that there will be an essentially continuous row of spaced balls, all around the groove 17. The installation is completed by offering the key mechanism 32 to the window in the cylindrical wall 31 of the turning member and then securing that key mechanism in position by means of security bolts 34. The locking member completes the groove 30 in the turning member whereby a continuous annular ball race is formed between the driving member and the turning member. The assembly is completed by securing the hand-wheel in position, with further security bolts 24, one of which threads into the key mechanism 32.

Once installed, the lock mechanism can be removed only by partial destruction. For example, the bolts 34 must be cut out of the side plates 33 or those side plates themselves may be cut away, typically with an angle grinder. Another possibility is to cut away much of the cover plate 40, so as to expose the secondary nut 15 and permit removal of the lock mechanism, as a whole.

The cover plate 40 has a central hole 53 through which the valve stem 13 may rise, as the valve is opened, in the case of a valve with a stem having a relatively long motion. In this case, a sleeve (not shown) may be fitted to the underside of the cover plate, to restrict access to the secondary nut 15. Where the stem performs a relatively small excursion above the secondary nut 15, an internal cap 54 may be fitted beneath the cover plate 40 and located by the bearing ring 41, as shown in Figure 3.

## Claims

1. A lock mechanism (10) for a valve having a valve body (12) and a rotatable valve operating member (11) projecting from the valve body, which mechanism comprises a driving member (14) adapted for attachment to the operating member for rotation therewith, a turning member (21) mounted coaxially on the driving member, and a key mechanism (32) secured to the turning member and having a detent (50) selectively engageable with the driving member by use of a key to prevent relative rotation between the driving member and the turning member, **characterised in that** the driving member (14) is formed with an arcuate outwardly-directed groove (17) of part-circular cross-section and centred on the axis of the driving member, the turning member (21) is formed with an arcuate inwardly-directed groove (30) also of part-circular cross-section which groove is axially aligned with and opposed to the groove (17) of the driving member (14), **in that** there is a plurality of balls (37) each located partly in the two opposed grooves (17,30) thereby to prevent relative axial movement between the turning member (21) and the driving member (14) while permitting relative rotation therebetween, and **in that** the key mechanism (32) includes a portion (35) in axial alignment with the opposed grooves (17,30) which portion (35) serves to retain the balls in the opposed grooves.

2. A lock mechanism as claimed in claim 1, wherein the groove (17) in the driving member (14) is continuous and is encircled by the turning member (21).

3. A lock mechanism as claimed in claim 2, wherein said portion (35) of the key mechanism (32) blanks off the groove (17) of the turning member, so as to retain the plurality of balls within the groove in the turning member, and preferably defines an arcuate channel (36) in alignment with the arcuate groove (30) in the turning member (21), whereby balls (37) are located in the aligned channel and groove in the turning member as well as in the opposed groove in the driving member.

4. A lock mechanism as claimed in any of the preceding claims, wherein there is a journal (41) formed between the driving member (14) and the turning member (21) at an axial position spaced from the opposed grooves (17,30), which journal is preferably formed by a low-friction ring interposed between the driving member and the turning member and secured to one of the members.

5. A lock mechanism as claimed in any of the preceding claims, wherein the turning member (21) is of generally cylindrical form and is provided with a window in the cylindrical side wall (31) thereof, the key mechanism (32) being received in said window, between side plates (33) secured to the turning member.

6. A lock mechanism as claimed in claim 5, wherein security bolts (34) are used to attach the key mechanism (32) to the side plates (33) of the turning member.

7. A lock mechanism as claimed in any of the preceding claims, wherein the turning member (21) is provided with a skirt (43) which is adapted, in use, partially to encircle the top-works (12) of a valve to which the lock mechanism (10) is attached.

8. A lock mechanism as claimed in any of the preceding claims, wherein the key mechanism (32) includes a cam (50) rotatable by insertion into or removal from the key mechanism of a suitable key, the cam being engageable in a recess (19) in the driving member (14) to permit drive to be imparted thereto from the turning member (21).

9. A lock mechanism as claimed in claim 8, wherein a pawl (49) is arranged to engage the cam (50) and prevent the rotation thereof, other than when a suitable key is fully inserted into the key mechanism.

10. A lock mechanism as claimed in claim 8 or claim 9, wherein the driving member (14) has a cylindrical wall (18) and a plurality of recesses (19) are formed in that cylindrical wall, the cam (50) being receivable in any one of those recesses to permit drive to be imparted from the turning member to the driving member.

11. A valve having a valve body and a rotatable valve operating member (11) projecting from the valve body (12) in combination with a lock mechanism (10) as claimed in any of the preceding claims, wherein the driving member (14) of the lock mechanism is directly secured to the valve operating member (11).
